# EUROPEAN PATENT SPECIFICATION

(11) **EP 4 376 154 B1**
(45) Date of publication and mention of the grant of the patent: **23.10.2024**
(21) Application number: 22209868.3
(22) Date of filing: 28.11.2022
(51) Int. Cl.: H02J 7/34, H01M 10/42, H02J 50/10, H02J 7/00, H02J 50/00

(54) **BATTERY CELL BALANCING BASED ON WIRELESS CHARGING**
BATTERIEZELLENAUSGLEICH AUF BASIS VON DRAHTLOSEM LADEN
ÉQUILIBRAGE D'ÉLÉMENTS DE BATTERIE BASÉ SUR UNE CHARGE SANS FIL

(43) Date of publication of application: 29.05.2024
(73) Proprietor: Renesas Design Austria GmbH, 8041 Graz (AT)
(72) Inventor: Rabl, Clemens, 8041 Graz (AT)
(74) Representative: Schwarz & Partner Patentanwälte GmbH

(56) References cited:
- JP-A- 2016 081 934
- US-A1- 2019 089 022
- US-B2- 11 495 994
- US-B2- 9 231 280

## Description

### FIELD OF THE INVENTION

The present invention relates to a system of a battery stack and a charger device to charge the battery stack with active balancing of battery cells, which battery stack comprises: a series of battery cells with at least a first battery cell and a second battery cell connected with battery cell contacts in series between a battery stack plus contact and a battery stack minus contact and
which charger device is connectable to a power source and comprises:
a charger module connected with a charger plus contact to the battery stack plus contact and connected with a charger minus contact to the battery stack minus contact and built to charge the series of battery cells based on a charger program when the charger device is connected to the power source and which system comprises:
a balancer module with a balancer stage for each of the battery cells of the battery stack built to transfer energy from an already fully charged battery cell to a battery cell with a lower state of charge, wherein each balancer stage of the balancer module is connected in parallel to only one sole battery cell of the battery cells of the battery stack.

The present invention furthermore relates to a battery stack with a series of battery cells with at least a first battery cell and a second battery cell connected with battery cell contacts in series between a battery stack plus contact and a battery stack minus contact.

### BACKGROUND OF THE INVENTION

Many portable devices are powered by a battery stack which comprises a number of at least two battery cells connected in series between a battery stack plus contact and a battery stack minus contact. This increases the available capacity and voltage of the battery stack. In such systems, the individual battery cells must be constantly monitored to ensure that they operate within a controlled range. Otherwise, the battery's capacity and life span may be compromised. Linear Technology offers an integrated circuit LTC680x family series for a charger device to charge such battery stacks and to monitor each individual cell in the battery stack. The LTC680x monitors cell parameters of each individual cell in the battery stack and communicates this information through a proprietary serial bus to a central processing unit. As a battery cell begins to reach the upper charge limit to be fully charged, commands are issued to the LTC680x to turn on that cell's passive shunt, bypassing the charging current to that cell and allowing the current to continue to the rest of the battery cells. Using this passive

shunt is inefficient and the shunted current produces considerable heat at higher charging currents.

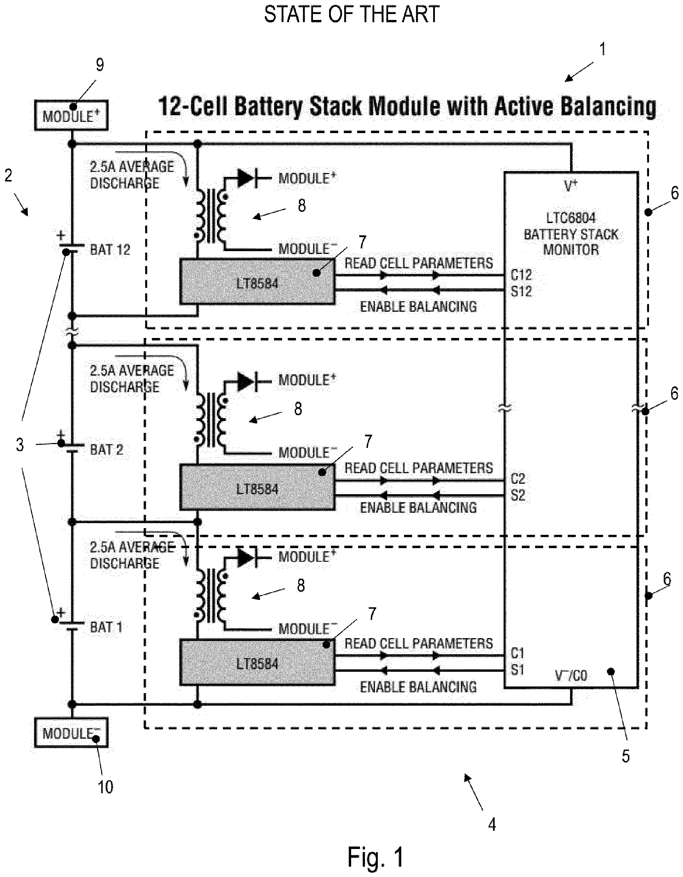

Linear Technology furthermore offers an integrated circuit LT8584 that enables actively redirecting the charging current back to the power source used to charge the battery stack. Instead of the energy being lost as heat, it is reused to charge the rest of the batteries in the stack. Figure 1 shows such a prior art system 1 of a battery stack 2 with twelve battery cells 3 connected in series and a charger device 4 to charge the battery stack 2. The charger device 4 comprises twelve balancer stages 6, which each are connected to a battery stack monitor 5 and comprise the LT8584 integrated circuit 7 and a wire-wound transformer 8. Each of the LT8584 integrated circuits 7 measures the actual state of charge of the battery cell 3 it is connected to and provides these cell parameters to the battery stack monitor 5 via a proprietary serial bus. The battery stack monitor 5 is the master that oversees all these cell parameters of all battery cells 3 in the battery stack 2 and sends commands to the individual LT8584 integrated circuits 7 to discharge current through a primary coil of the wire-wound transformer 8 in case the battery cell 3 already reached the fully charged state of charge. A secondary coil of the wire-wound transformer 8 is connected to a battery stack plus contact 9 and a battery stack minus contact 10 and transfers such discharge current back for reuse to charge the battery stack 2.

This known system 1 for active balancing of the battery cells 3 of the battery stack 2 comprises the disadvantage that a lot energy is lost in the wire-wound transformers 8 for those battery cells 3 that are already fully charged. Charge current that flows from battery stack plus contact 9 through the series of battery cells 3 to the battery stack minus contact 10, as long as all these battery cells 3 are charged, is discharged or bypassed through the primary coil of the wire-wound transformer 8 for those balancer stages 6 with already fully charged battery cells 3, what until the end of the charge program causes a high energy loss in those wire-wound transformers 8.

Furthermore a balancer cable has to be used to connect each of the balancer stages 6 with one of the battery cells 3. This additional cable between the battery stack 2 and the charger device 4 adds complexity and costs.

US 11,495,994 B2 discloses a battery stack for active balancing of battery cells based on a decentralized system. Each battery cell is connected via a dissipative element with a balancer unit. The dissipative elements are realized as MOSFET and used at the end of charging to short-circuiting the battery cell that is already fully charged.

US 2019/0089022 A1 discloses a battery stack with battery cells, each connected to a transmission module to communicate with a reception module of a centralized battery management unit. The battery management unit monitors the remaining capacity and charging state of the battery cells and detects battery cells with operation abnormality to exchange these. All transmission modules and the reception module are arranged on a magnetic core to enable data communication based on RFID (NFC).

### SUMMARY OF THE INVENTION

It is an object of the invention to provide a system of a battery stack and a charger device to charge the battery stack with active balancing of battery cells and to provide a battery stack which improves the energy efficiency and enables more flexibility for faster charging of the battery stack.

This object is achieved in a system according to claim 1 and a battery stack according to claim 9.

In an inventive system each balancer stage of the balancer module comprises an RFID antenna and is built to communicate decentrally and without involvement of a master with one or two or all other balancer stages to exchange information and energy between the battery cells of these balancer stages. This means that at least a first RFID antenna of a first balancer stage connected in parallel to the first battery cell and a second RFID antenna of a second balancer stage connected in parallel to the second battery cell are arranged or located in a way that they are in an RFID communication distance to each other to exchange energy and/or information via a common first magnetic field. This direct energy transfer from one already fully charged battery cell to a not yet fully charged battery cell is much more efficient than feeding the discharge current of the state of the art system back into the power system of the battery stack plus contact and a battery stack minus contact to charge the battery stack. The galvanic isolation of the battery cells and balancer stages using RFID antennas enables a substantial advantage for the active balancing of the battery cells.

This inventive balancer module with individual self-sufficient balancer stages may be part of the physical casing of the charger device or, in another embodiment of the invention, may be part of the battery stack. This reduces the charger device to a charger integrated circuit that processes the charger program to charge a for instance Li-Ion battery stack that needs to be charged by the charger device in different time periods with different charge currents and charge voltages. As in this embodiment the balancer module is part of the battery stack no balancer cable is needed to connect each balancer stage with the relevant battery cell, which reduces technical complexity and cost and improves ease of use. The further advantage is achieved, that after charging of the battery stack during the period the battery stack powers a portable device, the balancer module may be used to transfer energy from a battery cell with a higher state of charge to a battery cell with a compared to this higher state of charge lower state of charge. This helps to avoid deep discharge of a battery cell while other battery cells of this battery stack still are in an acceptable higher state of charge. This balancing of the battery stack during the use of the battery stack to power a portable device enables to extend the lifetime of the battery stack.

The communication between the first balancer stage and the second balancer stage and all other balancer stages of the balancer module may comply with the standard ISO 18.092 known as Near Field Communication. Any other comparable RFID standard could be used as well. Near Field Communication as one example realizes an RFID communication distance of about 10 centimeters. A company developing a charger device or a battery stack with balancer stages that each comprise their own RFID antenna may therefore decide which of these RFID antennas will be located within or without the RFID communication distance of other RFID antennas or other balancer stages. Based on this physical arrangement of the RFID antennas some of balancer stages may communicate with each other and their battery cells may exchange energy with each other and others may not, what enables a lot of different embodiments that will have advantages depending of the concrete different applications.

In another embodiment of the invention two or more battery stacks may be just put together in a distance closer than the RFID communication distance. As the individual balancer stages are built to communicate with other balancer stages to decide which of the battery cells has a stronger need to receive energy this communication is not limited to balancer stages of one balancer module and does not need a master as in state of the art systems. As a result the two battery stacks put close together will charge those battery cells that have the strongest need for energy without any charger device involved.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a system according to the state of the art, which comprises a battery stack with twelve battery cells connected in series and a charger device to charge the battery stack.
Figure 2 shows a system according to the invention, which comprises a balancer module wherein each balancer stage comprises its own RFID antenna to independently communicate with other balancer stages about the transfer of energy.

### DETAILED DESCRIPTION OF EMBODIMENTS

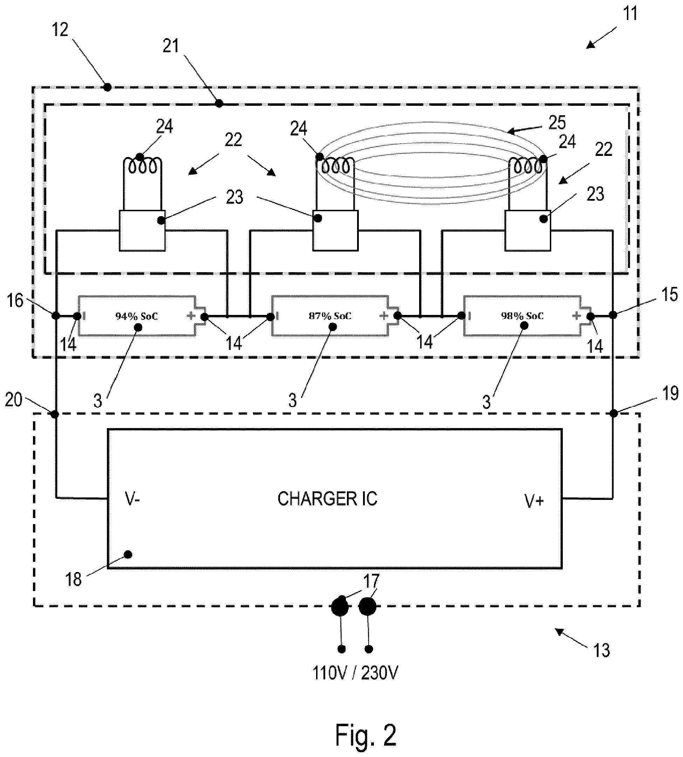

Figure 2 shows a first embodiment of the invention with a system 11 of a battery stack 12 and a charger device 13 to charge the battery stack 12 with active balancing of the Li-Ion battery cells 3. The battery stack 12 comprises a series of three battery cells 3 with at least a first battery cell and a second battery cell connected with battery cell contacts 14 in series between a battery stack plus contact 15 and a battery stack minus contact 16. The charger device 13 is connectable with contacts 17 and a cable to mains to power the charger device 13 as power source. The charger device 13 comprises a charger integrated circuit 18 connected with a charger plus contact 19 to the battery stack plus contact 15 and connected with a charger minus contact 20 to the battery stack minus contact 16. The charger integrated circuit 18 is built to charge the series of battery cells 3 based on a charger program when the charger device 13 is connected to the power source to charge the Li-Ion battery cells 3. The charger program charges the battery cells 3 in different time periods with different charge currents and charge voltages as for instance it is described in EP 4 040 637 A1.

In the embodiment of the invention shown in figure 2 the battery stack 12 of system 11 comprises a balancer module 21 realized on a printed circuit board with a balancer stage 22 for each of the battery cells 3 of the battery stack 12. Each of the balancer stages 22 is built to transfer energy from an already fully charged battery cell 3 to a battery cell 3 with a lower state of charge, wherein each balancer stage 22 of the balancer module 21 is connected in parallel to only one sole battery cell 3 of the battery stack 12. Each balancer stage 22 comprises an RFID chip 23 connected to an RFID antenna 24. The RFID chip 23 in this embodiment of the invention is realized to comply with the standard ISO 18.092 known as Near Field Communication and processes a program that enables it to process an anti-collision and RFID communication with other RFID chips 23 of the balancer module 21. The RFID chip 23 or another integrated circuit of the balancer stage 22 not shown in figure 2 is built to measure the state of charge of the battery cell 3 it is in parallel connected to. Furthermore a temperature sensor may be added to the balancer stage 22 to enable the balancer stage 22 to measure the individual temperature of the battery cell 3 it is in parallel connected to. Other sensors or measurement elements may be added to the balancer stage 22 to gather such actual cell parameters about this individual battery cell 3.

The program processed by all of the RFID chips 23 enable them to transmit and receive (to exchange) these cell parameters and other information via a common magnetic field 25. The magnetic field 25 may be generated by one of the balancer stages 22 and other balancer stages 22 with RFID antennas 24 in an RFID communication range of for instance 10 centimeters may communicate with this balancer stage 22. There are different ways to implement such a program logic, but as one example the first balancer stage 22 connected to the battery cell 3 with a state of charge of 98% may communicate with the second balancer stage 22 connected to the battery cell 3 with a state of charge of 87%. The first balancer stage 22 and the second balancer stage 22 every for instance one or five seconds exchange these cell parameters during the time the charger device 13 processes its charger program and charges the battery cells 3. Each of these balancer stages 22 is built to compare cell parameters received from other balancer stages 22 with its own cell parameters and, as a result of this comparison, is built to negotiate and agree on an energy transfer with one or more balancer stages 22 that share the common magnetic field 25 to transfer energy from the first balancer stage 22 with a higher state of charge of the first battery cell 3 to the second balancer stage 22 with the compared to the higher state of charge of the first battery cell 3 lower state of charge of the second battery cell 3. This negotiation and agreement may be realized in a way that each balancer stage 22 that is in the need to dispense energy or that is in the need to receive energy for their parallel connected battery cells 3 are free to ask others and that both affected balancer stages 22 then have to agree to the transfer of energy before it starts. In another realization the balancer stage 22 in the need to dispense energy will simply use more or less all energy provided by the charger integrated circuit 18 at the battery cell contacts 14 of the already fully charged battery cell 3 to generate the magnetic field 25. A balancer stage 22 in the need to receive energy for its battery cell 3 will simply harvest as much as possible energy from the magnetic field generated by another balancer stage 22. Other more intelligent realizations with concrete agreements might be possible as well.

At the time instance when the battery cell 3 connected to the first balancer stage 22 reaches the full state of charge, what might be 100% or less as defined in a setup, the first balancer stage 22 informs the second balancer stage 22 that the second balancer stage 22 is allowed and obliged to harvest energy from the magnetic field 25 generated by the first balancer stage 22. The RFID chip 23 of the first balancer stage 22 uses more or less all energy provided by the charger integrated circuit 18 at the battery cell contacts 14 of the already fully charged battery cell 3 to generate the magnetic field 25 and in that way bypasses the charge current for this fully charged battery cell 3. The energy harvested by the second balancer stage 22 from the magnetic field 25 is used by the RFID chip 23 of the second balancer stage 22 to provide more energy at the battery cell contacts 14 of the not yet fully charged battery cell 3. As a result, energy is transferred from the already fully charged battery cell 3 to the battery cell 3 with a lower state of charge to on the one hand protect the already fully charged battery cell 3 from overloading and to on the other hand speed-up the charging process of the not yet fully charged battery cell 3. This active balancing is achieved without any balancing cable connection from the charger device 13 to the battery stack 12 and without a master integrated circuit of the state of the art to manage the balancer stages to achieve active balancing. Furthermore, the balancer stages 22 are only connected via the air interface of the magnetic field 25 what ensures complete galvanic isolation.

In the first embodiment of the invention shown in figure 2 all the RFID antennas 24 of the three balancer stages 22 are arranged on the printed circuit board within the same RFID communication range to ensure that information and energy exchange and active balancing is possible between all three balancer stages 22 and their battery cells 3. In other applications and battery stacks other arrangements might be useful where different subsets of balancer stages of the same balancer module are defined and only the balancer stages of each subset are arranged in RFID communication distance to communicate and exchange energy. In further embodiments of the invention one or more RFID antennas 24 of balancer stages 22 may be located at the outer area of the RFID communication distance where the magnetic field 25 is not that strong anymore like in the inner area of the RFID communication range. With these different locations balancer stages 22 in the inner area will be in a preferred position to harvest more energy than the other balancer stages 22 at the outer area of the RFID communication distance to the balancer stage 22 that generates the magnetic field 25. A person skilled in the art will understand the different applications possible with these different locations of RFID antennas 24 that enable or disable or favor some of the balancer stages.

In another use case of the battery stack 12 shown in figure 2 the battery stack 12 has been charged with the charger device 13 and is now disconnected from charger device 13 and connected to a portable device to power this portable device. The portable device may be any device like a mobile phone or radio or model airplane or other device that needs to be powered with battery cells 3. During the use of this portable device the state of charge of the battery cells 3 reduces, but due to differences of the battery cells 3 not in the same speed. As a result each of the battery cells 3 may comprise a different state of charge as shown in figure 2. From time to time or depending on the state of charge of some or all of the battery cells 3 the balancer stages 22 may start to communicate and exchange their cell parameters. Based on the comparison of cell parameters received from other balancer stages 22 and the cell parameters of the own battery cell 3 balancer stages 22 may decide to exchange energy between their battery cells 3. This enables to avoid situations where one of the battery cells 3 gets deep discharged and as a result destroys the complete battery stack 12 while other battery cells 3 still have a higher state of charge.

In a further embodiment of the invention the three RFID chips 23 are realized on one single integrated circuit and only their RFID antennas 24 are separate physical elements. In that case the communication between the balancer stages could be realized just within this integrated circuit and only the energy transfer between the balancer stages would be via the RFID antennas 24.

In a further embodiment of the invention, not shown in the figures, the charger device of system comprises a balancer module realized on a printed circuit board of the charger device with a balancer stage for each of the battery cells of the battery stack. In this less preferred embodiment, as a balancer cable from the charger device to the battery stack would still be needed, the transfer of energy for active balancing of the battery cells would still be done via RFID antennas located within the charger device.

In other embodiments of the invention the RFID communication distance may be only 1 centimeter or up to 1 meter.

## Claims

1. System (11) of a battery stack (12) and a charger device (13) to charge the battery stack (12) with active balancing of battery cells (3), which battery stack (12) comprises:
a series of battery cells (3) with at least a first battery cell and a second battery cell connected with battery cell contacts (14) in series between a battery stack plus contact (15) and a battery stack minus contact (16) and
which charger device (13) is connectable to a power source and comprises:
a charger module (18) connected with a charger plus contact (19) to the battery stack plus contact (15) and connected with a charger minus contact (20) to the battery stack minus contact (16) and built to charge the series of battery cells (3) based on a charger program when the charger device (13) is connected to the power source and which system (11) comprises:
a balancer module (21) with a balancer stage (22) for each of the battery cells (3) of the battery stack (12) built to transfer energy from an already fully charged battery cell (3) to a battery cell (3) with a lower state of charge, wherein each balancer stage (22) of the balancer module (21) is connected in parallel to only one sole battery cell (3) of the battery cells (3) of the battery stack (12), **characterized in,**
**that** each balancer stage (22) of the balancer module (21) comprises an RFID antenna (24), wherein at least a first RFID antenna of a first balancer stage connected in parallel to the first battery cell and a second RFID antenna of a second balancer stage connected in parallel to the second battery cell are arranged in an RFID communication distance to exchange energy and information via a common first magnetic field (25),
wherein the first balancer stage (22) uses more or less all energy provided by the charger module (18) at the battery cell contacts (14) of the already fully charged battery cell (3) to generate a magnetic field (25) and in that way bypasses a charge current for this fully charged battery cell (3).

2. System (11) according to claim 1, wherein each balancer stage (22) is built to measure the actual state of charge and/or temperature of the parallel connected battery cell (3) and to exchange such cell parameters via the common first magnetic field with other balancer stages (22) of the balancer module (21).

3. System (11) according to claim 2, wherein each balancer stage (22) is built to compare cell parameters from other balancer stages (22) with its own cell parameters and as a result of this comparison is built to agree on an energy transfer with one or more balancer stages (22) that share the common first magnetic field to transfer energy from the first balancer stage with a higher state of charge of the first battery cell to the second balancer stage with the compared to the higher state of charge of the first battery cell lower state of charge of the second battery cell.

4. System (11) according to any of the claims 1 to 3, wherein a first subset of balancer stages of the balancer module (21) comprises the first balancer stage and the second balancer stage that share the common first magnetic field to exchange energy and/or information and a second subset of balancer stages of the balancer module comprises a third balancer stage with a third RFID antenna and a fourth balancer stage with a fourth RFID antenna that share a common second magnetic field to exchange energy and/or information.

5. System (11) according to claim 4, wherein the first antenna and the second antenna that share the common first magnetic field and the third antenna and the fourth antenna that share the common second magnetic field are arranged to enable the exchange of energy and/or information between all four balancer stages.

6. System (11) according to claim 4, wherein the first antenna and the second antenna that share the common first magnetic field are arranged outside of the RFID communication distance of the third antenna and the fourth antenna that share the common second magnetic field to disable the exchange of energy and/or information.

7. System (11) according to any of the claims 3 to 6, wherein the balancer module (21) is built to transfer energy from one balancer stage (22) with a higher state of charge of the battery cell (3) to another balancer stage (22) with a lower state of charge of the battery cell (3), even when the charger device (13) is disconnected from the battery stack (12).

8. System (11) according to any of the claims 1 to 7, which balancer stages (22) are built to exchange energy and/or information via the common first magnetic field as NFC interface that complies with the standard ISO 18.092.

9. Battery stack (12) with a series of battery cells (3) with at least a first battery cell and a second battery cell connected with battery cell (14) contacts in series between a battery stack plus contact (15) and a battery stack minus contact (16) **characterized in, that** the battery stack (12) comprises a balancer module (21) with a balancer stage (22) for each of the battery cells (3) of the battery stack (12) built to transfer energy from a battery cell (3) with a higher state of charge to a battery cell (3) with a compared to this higher state of charge lower state of charge, wherein each balancer stage (22) of the balancer module (21) is connected in parallel to only one sole battery cell (3) of the battery cells (3) of the battery stack (12), and
that each balancer stage (22) of the balancer module (21) comprise an RFID antenna (24), wherein at least a first RFID antenna of a first balancer stage connected in parallel to the first battery cell and a second RFID antenna of a second balancer stage connected in parallel to the second battery cell are arrange in an RFID communication distance to exchange energy and information via a common first magnetic field (25),
wherein the first balancer stage (22) uses more or less all energy provided by the charger module (18) at the battery cell contacts (14) of the already fully charged battery cell (3) to generate a magnetic field (25) and **in that** way bypasses a charge current for this fully charged battery cell (3).

10. Battery stack (12) according to claim 9, wherein each balancer stage (22) is built to measure the actual state of charge and/or temperature of the parallel connected battery cell (3) and to exchange such cell parameters via the common first magnetic field with other balancer stages (22) of the balancer module (21).

11. Battery stack (12) according to claim 10, wherein each balancer stage (22) is built to compare cell parameters from other balancer stages (22) with its own cell parameters and as a result of this comparison is built to agree on an energy transfer with one or more balancer stages (22) that share the common first magnetic field to transfer energy from the first balancer stage with a higher state of charge of the first battery cell to the second balancer stage with the compared to the higher state of charge of the first battery cell lower state of charge of the second battery cell.

12. Battery stack (12) according to any of the claims 9 to 11, wherein a first subset of balancer stages of the balancer module (21) comprises the first balancer stage and the second balancer stage that share the common first magnetic field to exchange energy and/or information and a second subset of balancer stages of the balancer module comprises a third balancer stage with a third RFID antenna and a fourth balancer stage with a fourth RFID antenna that share a common second magnetic field to exchange energy and/or information.

13. Battery stack (12) according to claim 12, wherein the first antenna and the second antenna that share the common first magnetic field and the third antenna and the fourth antenna that share the common second magnetic field are arranged to enable the exchange of energy and/or information between all four balancer stages.

14. Battery stack (12) according to claim 12, wherein the first antenna and the second antenna that share the common first magnetic field are arranged outside of the RFID communication distance of the third antenna and the fourth antenna that share the common second magnetic field to disable the exchange of energy and/or information.

15. Battery stack (12) according to any of the claims 11 to 14, wherein the balancer module (21) is built to transfer energy from one balancer stage (22) with a higher state of charge of the battery cell (3) to another balancer stage (22) with a lower state of charge of the battery cell (3), even when the charger device (13) is disconnected from the battery stack (12).

16. Battery stack (12) according to any of the claims 9 to 15, which balancer stages (22) are built to exchange energy and/or information via the common first magnetic field as NFC interface that complies with the standard ISO 18.092.

## Patentansprüche

1. System (11) eines Batteriestapels (12) und einer Ladevorrichtung (13) zum Laden des Batteriestapels (12) mit aktivem Ausgleich von Batteriezellen (3), wobei der Batteriestapel (12) umfasst:
eine Reihe von Batteriezellen (3) mit mindestens einer ersten Batteriezelle und einer zweiten Batteriezelle, die mit Batteriezellenkontakten (14) in Reihe zwischen einem Batteriestapel-Pluskontakt (15) und einem Batteriestapel-Minuskontakt (16) verbunden sind, und
wobei die Ladevorrichtung (13) an eine Stromquelle angeschlossen werden kann und Folgendes umfasst:
ein Lademodul (18), das mit einem Ladegerät-Pluskontakt (19) mit dem Batteriestapel-Pluskontakt (15) und mit einem Ladegerät-Minuskontakt (20) mit dem Batteriestapel-Minuskontakt (16) verbunden ist, und das so ausgebildet ist, dass es die Reihe von Batteriezellen (3) auf der Grundlage eines Ladeprogramms auflädt, wenn das Ladegerät (13) mit der Stromquelle verbunden ist, wobei das System (11) Folgendes umfasst:
ein Ausgleichsmodul (21) mit einer Ausgleichsstufe (22) für jede der Batteriezellen (3) des Batteriestapels (12), die ausgebildet ist, Energie von einer bereits voll geladenen Batteriezelle (3) auf eine Batteriezelle (3) mit einem niedrigeren Ladezustand zu übertragen, wobei jede Ausgleichsstufe (22) des Ausgleichsmoduls (21) parallel zu nur einer einzigen Batteriezelle (3) der Batteriezellen (3) des Batteriestapels (12) geschaltet ist, **dadurch gekennzeichnet, dass** jede Ausgleichsstufe (22) des Ausgleichsmoduls (21) eine RFID-Antenne (24) aufweist,
wobei mindestens eine erste RFID-Antenne einer ersten Ausgleichsstufe, die parallel zur ersten Batteriezelle geschaltet ist, und eine zweite RFID-Antenne einer zweiten Ausgleichsstufe, die parallel zur zweiten Batteriezelle geschaltet ist, in einer RFID-Kommunikationsdistanz angeordnet sind, um Energie und Informationen über ein gemeinsames erstes Magnetfeld (25) auszutauschen,
wobei die erste Ausgleichsstufe (22) mehr oder weniger die gesamte vom Lademodul (18) bereitgestellte Energie an den Batteriezellenkontakten (14) der bereits vollgeladenen Batteriezelle (3) zur Erzeugung eines Magnetfeldes (25) nutzt und damit einen Ladestrom für diese vollgeladene Batteriezelle (3) überbrückt.

2. System (11) nach Anspruch 1, wobei jede Ausgleichsstufe (22) so ausgebildet ist, dass sie den aktuellen Ladezustand und/oder die Temperatur der parallel geschalteten Batteriezelle (3) misst und solche Zellparameter über das gemeinsame erste Magnetfeld mit anderen Ausgleichsstufen (22) des Ausgleichsmoduls (21) austauscht.

3. System (11) nach Anspruch 2, wobei jede Ausgleichsstufe (22) so ausgebildet ist, dass sie Zellparameter von anderen Ausgleichsstufen (22) mit ihren eigenen Zellparametern vergleicht und als Ergebnis dieses Vergleichs so ausgebildet ist, eine Energieübertragung mit einer oder mehreren Ausgleichsstufen (22) zu vereinbaren, die das gemeinsame erste Magnetfeld teilen, um Energie von der ersten Ausgleichsstufe mit einem höheren Ladezustand der ersten Batteriezelle zur zweiten Ausgleichsstufe mit dem im Vergleich zum höheren Ladezustand der ersten Batteriezelle niedrigeren Ladezustand der zweiten Batteriezelle zu übertragen.

4. System (11) nach einem der Ansprüche 1 bis 3, wobei eine erste Teilmenge von Ausgleichsstufen des Ausgleichsmoduls (21) die erste Ausgleichsstufe und die zweite Ausgleichsstufe umfasst, die das gemeinsame erste Magnetfeld zum Austausch von Energie und/oder Informationen nutzen, und eine zweite Teilmenge von Ausgleichsstufen des Ausgleichsmoduls eine dritte Ausgleichsstufe mit einer dritten RFID-Antenne und eine vierte Ausgleichsstufe mit einer vierten RFID-Antenne umfasst, die ein gemeinsames zweites Magnetfeld zum Austausch von Energie und/oder Informationen nutzen.

5. System (11) nach Anspruch 4, wobei die erste Antenne und die zweite Antenne, die sich das gemeinsame erste Magnetfeld teilen, und die dritte Antenne und die vierte Antenne, die sich das gemeinsame zweite Magnetfeld teilen, so angeordnet sind, dass sie den Austausch von Energie und/oder Informationen zwischen allen vier Ausgleichsstufen ermöglichen.

6. System (11) nach Anspruch 4, wobei die erste Antenne und die zweite Antenne, die das gemeinsame erste Magnetfeld teilen, außerhalb des RFID-Kommunikationsabstands der dritten Antenne und der vierten Antenne, die das gemeinsame zweite Magnetfeld teilen, angeordnet sind, um den Austausch von Energie und/oder Informationen zu deaktivieren.

7. System (11) nach einem der Ansprüche 3 bis 6, wobei das Ausgleichsmodul (21) so ausgebildet ist, dass es Energie von einer Ausgleichsstufe (22) mit einem höheren Ladezustand der Batteriezelle (3) auf eine andere Ausgleichsstufe (22) mit einem niedrigeren Ladezustand der Batteriezelle (3) überträgt, auch wenn die Ladevorrichtung (13) vom Batteriestapel (12) getrennt ist.

8. System (11) nach einem der Ansprüche 1 bis 7, wobei die Ausgleichsstufen (22) zum Austausch von Energie und/oder Informationen über das gemeinsame erste Magnetfeld als NFC-Schnittstelle nach der Norm ISO 18.092 ausgebildet sind.

9. Batteriestapel (12) mit einer Reihe von Batteriezellen (3) mit mindestens einer ersten Batteriezelle und einer zweiten Batteriezelle, die mit Batteriezellenkontakten (14) in Reihe zwischen einem Batteriestapel-Pluskontakt (15) und einem Batteriestapel-Minuskontakt (16) verbunden sind, **dadurch gekennzeichnet, dass**
der Batteriestapel (12) ein Ausgleichsmodul (21) mit einer Ausgleichsstufe (22) für jede der Batteriezellen (3) des Batteriestapels (12) umfasst, die ausgebildet ist, um Energie von einer Batteriezelle (3) mit einem höheren Ladezustand auf eine Batteriezelle (3) mit einem im Vergleich zu diesem höheren Ladezustand niedrigeren Ladezustand zu übertragen, wobei jede Ausgleichsstufe (22) des Ausgleichsmoduls (21) parallel zu nur einer einzigen Batteriezelle (3) der Batteriezellen (3) des Batteriestapels (12) geschaltet ist, und
dass jede Ausgleichsstufe (22) des Ausgleichsmoduls (21) eine RFID-Antenne (24) umfasst, wobei mindestens eine erste RFID-Antenne einer ersten Ausgleichsstufe, die parallel zu der ersten Batteriezelle geschaltet ist, und eine zweite RFID-Antenne einer zweiten Ausgleichsstufe, die parallel zu der zweiten Batteriezelle geschaltet ist, in einer RFID-Kommunikationsdistanz angeordnet sind, um Energie und Informationen über ein gemeinsames erstes Magnetfeld (25) auszutauschen,
wobei die erste Ausgleichsstufe (22) mehr oder weniger die gesamte vom Lademodul (18) bereitgestellte Energie an den Batteriezellenkontakten (14) der bereits vollgeladenen Batteriezelle (3) zur Erzeugung eines Magnetfeldes (25) nutzt und damit einen Ladestrom für diese vollgeladene Batteriezelle (3) überbrückt.

10. Batteriestapel (12) nach Anspruch 9, wobei jede Ausgleichsstufe (22) dazu ausgebildet ist, den aktuellen Ladezustand und/oder die Temperatur der parallel geschalteten Batteriezelle (3) zu messen und solche Zellparameter über das gemeinsame erste Magnetfeld mit anderen Ausgleichsstufen (22) des Ausgleichsmoduls (21) auszutauschen.

11. Batteriestapel (12) nach Anspruch 10, wobei jede Ausgleichsstufe (22) so ausgebildet ist, dass sie Zellparameter von anderen Ausgleichsstufen (22) mit ihren eigenen Zellparametern vergleicht und als Ergebnis dieses Vergleichs eine Energieübertragung mit einer oder mehreren Ausgleichsstufen (22) vereinbart, die das gemeinsame erste Magnetfeld teilen, um Energie von der ersten Ausgleichsstufe mit einem höheren Ladezustand der ersten Batteriezelle zur zweiten Ausgleichsstufe mit dem im Vergleich zum höheren Ladezustand der ersten Batteriezelle niedrigeren Ladezustand der zweiten Batteriezelle zu übertragen.

12. Batteriestapel (12) nach einem der Ansprüche 9 bis 11, wobei eine erste Teilmenge von Ausgleichsstufen des Ausgleichsmoduls (21) die erste Ausgleichsstufe und die zweite Ausgleichsstufe umfasst, die das gemeinsame erste Magnetfeld zum Austausch von Energie und/oder Informationen nutzen, und eine zweite Teilmenge von Ausgleichsstufen des Ausgleichsmoduls eine dritte Ausgleichsstufe mit einer dritten RFID-Antenne und eine vierte Ausgleichsstufe mit einer vierten RFID-Antenne umfasst, die ein gemeinsames zweites Magnetfeld zum Austausch von Energie und/oder Informationen nutzen.

13. Batteriestapel (12) nach Anspruch 12, wobei die erste Antenne und die zweite Antenne, die sich das gemeinsame erste Magnetfeld teilen, und die dritte Antenne und die vierte Antenne, die sich das gemeinsame zweite Magnetfeld teilen, so angeordnet sind, dass sie den Austausch von Energie und/oder Informationen zwischen allen vier Ausgleichsstufen ermöglichen.

14. Batteriestapel (12) nach Anspruch 12, wobei die erste Antenne und die zweite Antenne, die sich das gemeinsame erste Magnetfeld teilen, außerhalb des RFID-Kommunikationsabstands der dritten Antenne und der vierten Antenne, die sich das gemeinsame zweite Magnetfeld teilen, angeordnet sind, um den Austausch von Energie und/oder Informationen zu deaktivieren.

15. Batteriestapel (12) nach einem der Ansprüche 11 bis 14, wobei das Ausgleichsmodul (21) so ausgebildet ist, dass es Energie von einer Ausgleichsstufe (22) mit einem höheren Ladezustand der Batteriezelle (3) zu einer anderen Ausgleichsstufe (22) mit einem niedrigeren Ladezustand der Batteriezelle (3) überträgt, auch wenn die Ladevorrichtung (13) vom Batteriestapel (12) getrennt ist.

16. Batteriestapel (12) nach einem der Ansprüche 9 bis 15, wobei die Ausgleichsstufen (22) so ausgebildet sind, dass sie über das gemeinsame erste Magnetfeld als NFC-Schnittstelle, die der Norm ISO18.092 entspricht, Energie und/oder Informationen austauschen.

## Revendications

1. Système (11) constitué d'un empilement de batteries (12) et d'un dispositif chargeur (13) pour charger l'empilement de batteries (12) avec un équilibrage actif d'éléments de batterie (3), lequel empilement de batteries (12) comprend :
une série d'éléments de batterie (3) avec au moins un premier élément de batterie et un second élément de batterie connectés à des contacts d'élément de batterie (14) en série entre un contact plus d'empilement de batteries (15) et un contact moins d'empilement de batteries (16) et
lequel dispositif chargeur (13) peut être connecté à une source d'alimentation et comprend :
un module de chargeur (18) connecté avec un contact plus de chargeur (19) au contact plus d'empilement de batteries (15) et connecté avec un contact moins de chargeur (20) au contact moins d'empilement de batteries (16) et construit pour charger la série d'éléments de batterie (3) sur la base d'un programme de chargeur lorsque le dispositif chargeur (13) est connecté à la source d'alimentation, et lequel système (11) comprend :
un module d'équilibrage (21) avec un étage d'équilibrage (22) pour chacun des éléments de batterie (3) de l'empilement de batteries (12), construit pour transférer de l'énergie d'un élément de batterie (3) déjà complètement chargé à un élément de batterie (3) avec un état de charge inférieur, dans lequel chaque étage d'équilibrage (22) du module d'équilibrage (21) est connecté en parallèle seulement à un unique élément de batterie (3) des éléments de batterie (3) de l'empilement de batteries (12), **caractérisé en ce que**
chaque étage d'équilibrage (22) du module d'équilibrage (21) comprend une antenne RFID (24), dans lequel au moins une première antenne RFID d'un premier étage d'équilibrage connecté en parallèle au premier élément de batterie et une deuxième antenne RFID d'un second étage d'équilibrage connecté en parallèle au second élément de batterie sont agencées dans une distance de communication RFID pour échanger de l'énergie et des informations via un premier champ magnétique commun (25),
dans lequel le premier étage d'équilibrage (22) utilise plus ou moins toute l'énergie fournie par le module de chargeur (18) au niveau des contacts d'élément de batterie (14) de l'élément de batterie déjà complètement chargé (3) pour générer un champ magnétique (25), et de cette manière contourne un courant de charge pour cet élément de batterie complètement chargé (3).

2. Système (11) selon la revendication 1, dans lequel chaque étage d'équilibrage (22) est construit pour mesurer l'état réel de charge et/ou de température de l'élément de batterie connecté en parallèle (3) et pour échanger de tels paramètres d'élément via le premier champ magnétique commun avec d'autres étages d'équilibrage (22) du module d'équilibrage (21).

3. Système (11) selon la revendication 2, dans lequel chaque étage d'équilibrage (22) est construit pour comparer des paramètres d'élément provenant d'autres étages d'équilibrage (22) avec ses propres paramètres d'élément et, à la suite de cette comparaison, est construit pour convenir d'un transfert d'énergie avec un ou plusieurs étages d'équilibrage (22) qui partagent le premier champ magnétique commun pour transférer de l'énergie depuis le premier étage d'équilibrage avec un état de charge plus élevé du premier élément de batterie au second étage d'équilibrage avec l'état de charge inférieur du second élément de batterie par comparaison à l'état de charge plus élevé du premier élément de batterie.

4. Système (11) selon l'une quelconque des revendications 1 à 3, dans lequel un premier sous-ensemble d'étages d'équilibrage du module d'équilibrage (21) comprend le premier étage d'équilibrage et le deuxième étage d'équilibrage qui partagent le premier champ magnétique commun pour échanger de l'énergie et/ou des informations et un deuxième sous-ensemble d'étages d'équilibrage du module d'équilibrage comprend un troisième étage d'équilibrage avec une troisième antenne RFID et un quatrième étage d'équilibrage avec une quatrième antenne RFID qui partagent un second champ magnétique commun pour échanger de l'énergie et/ou des informations.

5. Système (11) selon la revendication 4, dans lequel la première antenne et la deuxième antenne qui partagent le premier champ magnétique commun et la troisième antenne et la quatrième antenne qui partagent le second champ magnétique commun sont agencées pour permettre l'échange d'énergie et/ou d'informations entre les quatre étages d'équilibrage.

6. Système (11) selon la revendication 4, dans lequel la première antenne et la deuxième antenne qui partagent le premier champ magnétique commun sont disposées en dehors de la distance de communication RFID de la troisième antenne et de la quatrième antenne qui partagent le second champ magnétique commun pour désactiver l'échange d'énergie et/ou d'informations.

7. Système (11) selon l'une quelconque des revendications 3 à 6, dans lequel le module d'équilibrage (21) est construit pour transférer de l'énergie d'un certain étage d'équilibrage (22) avec un état de charge supérieur de l'élément de batterie (3) à un autre étage d'équilibrage (22) avec un état de charge inférieur de l'élément de batterie (3), même lorsque le dispositif chargeur (13) est déconnecté de l'empilement de batteries (12).

8. Système (11) selon l'une quelconque des revendications 1 à 7, lesquels étages d'équilibrage (22) étant construits pour échanger de l'énergie et/ou des informations via le premier champ magnétique commun en tant qu'interface NFC qui se conforme à la norme ISO18.092.

9. Empilement de batteries (12) avec une série d'éléments de batterie (3) avec au moins un premier élément de batterie et un second élément de batterie connectés à des contacts d'élément de batterie (14) en série entre un contact plus d'empilement de batteries (15) et un contact moins d'empilement de batteries (16), **caractérisé en ce que** l'empilement de batteries (12) comprend un module d'équilibrage (21) avec un étage d'équilibrage (22) pour chacun des éléments de batterie (3) de l'empilement de batteries (12), construit pour transférer de l'énergie d'un élément de batterie (3) avec un état de charge plus élevé à un élément de batterie (3) avec un état de charge inférieur par comparaison à cet état de charge plus élevé, dans lequel chaque étage d'équilibrage (22) du module d'équilibrage (21) est connecté en parallèle seulement à un unique élément de batterie (3) des éléments de batterie (3) de l'empilement de batteries (12), et
**en ce que** chaque étage d'équilibrage (22) du module d'équilibrage (21) comprend une antenne RFID (24), dans lequel au moins une première antenne RFID d'un premier étage d'équilibrage connecté en parallèle au premier élément de batterie et une deuxième antenne RFID d'un second étage d'équilibrage connecté en parallèle au second élément de batterie sont agencées dans une distance de communication RFID pour échanger de l'énergie et des informations via un premier champ magnétique commun (25),
dans lequel le premier étage d'équilibrage (22) utilise plus ou moins toute l'énergie fournie par le module de chargeur (18) au niveau des contacts d'élément de batterie (14) de l'élément de batterie déjà complètement chargé (3) pour générer un champ magnétique (25), et de cette manière contourne un courant de charge pour cet élément de batterie complètement chargé (3).

10. Empilement de batteries (12) selon la revendication 9, dans lequel chaque étage d'équilibrage (22) est construit pour mesurer l'état réel de charge et/ou de température de l'élément de batterie connecté en parallèle (3) et pour échanger de tels paramètres d'élément via le premier champ magnétique commun avec d'autres étages d'équilibrage (22) du module d'équilibrage (21).

11. Empilement de batteries (12) selon la revendication 10, dans lequel chaque étage d'équilibrage (22) est construit pour comparer des paramètres d'élément provenant d'autres étages d'équilibrage (22) avec ses propres paramètres d'élément et, à la suite de cette comparaison, est construit pour convenir d'un transfert d'énergie avec un ou plusieurs étages d'équilibrage (22) qui partagent le premier champ magnétique commun pour transférer de l'énergie depuis le premier étage d'équilibrage avec un état de charge plus élevé du premier élément de batterie au second étage d'équilibrage avec l'état de charge inférieur du second élément de batterie par comparaison à l'état de charge plus élevé du premier élément de batterie.

12. Empilement de batteries (12) selon l'une quelconque des revendications 9 à 11, dans lequel un premier sous-ensemble d'étages d'équilibrage du module d'équilibrage (21) comprend le premier étage d'équilibrage et le deuxième étage d'équilibrage qui partagent le premier champ magnétique commun pour échanger de l'énergie et/ou des informations et un deuxième sous-ensemble d'étages d'équilibrage du module d'équilibrage comprend un troisième étage d'équilibrage avec une troisième antenne RFID et un quatrième étage d'équilibrage avec une quatrième antenne RFID qui partagent un second champ magnétique commun pour échanger de l'énergie et/ou des informations.

13. Empilement de batteries (12) selon la revendication 12, dans lequel la première antenne et la deuxième antenne qui partagent le premier champ magnétique commun et la troisième antenne et la quatrième antenne qui partagent le second champ magnétique commun sont agencées pour permettre l'échange d'énergie et/ou d'informations entre les quatre étages d'équilibrage.

14. Empilement de batteries (12) selon la revendication 12, dans lequel la première antenne et la deuxième antenne qui partagent le premier champ magnétique commun sont disposées en dehors de la distance de communication RFID de la troisième antenne et de la quatrième antenne qui partagent le second champ magnétique commun pour désactiver l'échange d'énergie et/ou d'informations.

15. Empilement de batteries (12) selon l'une quelconque des revendications 11 à 14, dans lequel le module d'équilibrage (21) est construit pour transférer de l'énergie d'un certain étage d'équilibrage (22) avec un état de charge supérieur de l'élément de batterie (3) à un autre étage d'équilibrage (22) avec un état de charge inférieur de l'élément de batterie (3), même lorsque le dispositif chargeur (13) est déconnecté de l'empilement de batteries (12).

16. Empilement de batteries (12) selon l'une quelconque des revendications 9 à 15, lesquels étages d'équilibrage (22) étant construits pour échanger de l'énergie et/ou des informations via le premier champ magnétique commun en tant qu'interface NFC qui se conforme à la norme ISO18.092.
